# EUROPEAN PATENT APPLICATION

(11) **EP 4 174 596 A1**
(43) Date of publication of application: **03.05.2023**
(21) Application number: 21205439.9
(22) Date of filing: 29.10.2021
(51) Int. Cl.: G05B 19/418

(54) **SYSTEM AND METHOD FOR COLLECTING MES INFORMATION**

(71) Applicant: Siemens Aktiengesellschaft, 80333 München (DE)
(72) Inventor: COPPOLA, Andrea, 16131 Genova (IT); CHEAH, Zi Liang, 14200 Sungai Bakap, Penang (MY)
(74) Representative: Siemens Patent Attorneys

(57) **Abstract**

The present invention concerns a method and system for automatically collecting MES system information and configuration, the method comprising:
a) automatically collecting, by an executable file (21, 22) configured for being copied on a non-volatile memory of the MES system, and upon execution of said executable file, MES system information and configuration;
b) automatically creating, by said executable file (21, 22), a report comprising the collected system information and configuration converted into an HTML format.

## Description

The invention relates to a method and system for collecting information from a Manufacturing Execution System (MES system, also simply called "MES" hereafter).

A MES system is a system that connects and monitors machines and work centers on the factory floor. The main goal of an MES is to ensure successful implementation of manufacturing operations and improve production efficiency. The MES is thus mainly focused on the "Production" at the shop floor.

A typical MES system consists of a set of applications (also called software products or solutions) that must be integrated and coordinated to provide a complete set of MES functionalities that are required for the target industry. It enables for instance process automation and process monitoring for controlling a large variety of production resources, machines, and plants (MES objects). It connects thus the hardware of the shop floor, e.g. systems in charge of the production control within a production line, that provide for instance counting, measuring, positioning data, to a client application layer configured for driving the production processes, collecting sometimes a huge amount of data with the final goal of optimizing the production. A MES system is indeed typically configured for consolidating all production processes to improve quality management, advanced planning and scheduling, R&D management, tracking and analysis of production processes, etc.

One problematic of MES systems is related to the collection or retrieval of information when an issue or failure occurs. In such a case, a maintenance operator needs for instance to analyze data in connection with said issue or failure. This requires typically to perform multiple actions, such as
- using remote sessions for enabling said maintenance operator to check the different layers or subsystems of the MES system, like Operating System, Network, Database, Logs, etc.; and/or
- performing data retrieval manually from different MES system layers; and/or
- using a check list configured for identifying MES system configurations and performance bottlenecks.

The retrieved information still needs to be consolidated and analyzed in order to identify a source of the failure/issue and a potential cause. However, the process going from the collection and retrieval of data to their consolidation for enabling a global view of the issue for a maintenance operator is complex and time consuming. Alternative solutions are based on software that are configured for automatically collecting relevant information from the MES system. Unfortunately, such software needs to be installed, e.g. on an application server of the MES system, and once installed, it cannot be modified or adapted easily to the MES system, for collecting for instance a specific information that is missing. Thus, the existing solution for collecting information that is based on installed software fails to provide an appropriate flexibility when considering the complexity of MES systems and of the data that have to be retrieved.

Therefore, there is still a need for a system and method that facilitate the collection of data within a MES system, free of any software installation, and providing an operator with a consolidated view of relevant MES system data. An objective of the present invention is therefore to provide a method and a system that make said collection of data easier for an operator.

This objective is achieved according to the present invention by a method, preferentially a computer-implemented method, and a system for collecting MES system data according to the object of the independent claims. Dependent claims present additional advantages of the invention.

The present invention proposes indeed a method for automatically collecting data from a MES system, the method comprising the following steps:
a) automatically collecting, by an executable file, for instance a first executable file and a second executable file, configured for being copied on a non-volatile memory of the MES system, e.g. a server folder of the MES system, and upon execution of said executable file, for instance upon execution of said first executable file and said second executable file,, MES system information and configuration, wherein said MES system information and configuration comprises at least MES functional data, i.e. data which comprise information that has an effect on the technical working of the MES system;
b) automatically creating, by said executable file, for instance by each of said first executable file and said second executable file, a report comprising the collected system information and configuration converted into an HTML format;
c) optionally, automatically sending and/or displaying and/or saving said report.

The present invention also concerns a system, e.g. a computer system, configured for automatically collecting data from a MES system, the system comprising:
- a graphical user interface (GUI);
- a processing unit configured for acquiring and processing data;
- a memory;
wherein said processing unit is characterized in that it is configured for automatically collecting, by an executable file configured for being copied on a non-volatile memory of the MES system, and upon automatic execution of said executable file, MES system information and configuration, wherein said execution of said executable file is further configured for automatically generating a report comprising the collected system information and configuration converted into an HTML format, said processing unit being configured for automatically acquiring said report and optionally automatically sending and/or displaying and/or saving said report.

Preferentially, the system and method according to the invention comprise said first executable file configured for being copied on a server folder comprising installed MES software and said second executable file copied on a server folder comprising an SQL database server. Advantageously, using said executable file according to the invention makes the collection of MES system data free of any software installation, free of any manual intervention in the sense that the HTML report according to the invention comprises already all relevant information regarding the MES system, providing for instance an overview of the MES system configuration, logs, etc. Furthermore, the executable file according to the invention can be easily adapted for reporting, in said HTML format, additional relevant data, by modifying the code of the executable file, and conversion of said code into a portable application, i.e. into said executable file.

In particular, the executable file according to the invention, e.g. said first executable file and/or said second executable file, is configured for aggregating information from the different resources or subsystems of the MES system into a single document, i.e. said HTML report, making much easier the work of a maintenance operator.

Finally, the present invention concerns also a non-transitory machine-readable medium storing instructions executable by a processing unit to cause a computing system to perform the steps of the claimed method.

Preferred but not exclusive embodiments of the invention will now be described with reference to the accompanying drawings, which depict in:
- Figure 1: schematically a preferred embodiment of the method according to the invention; and
- Figure 2: schematically a system for automatically collecting MES system information and configuration according to the invention.

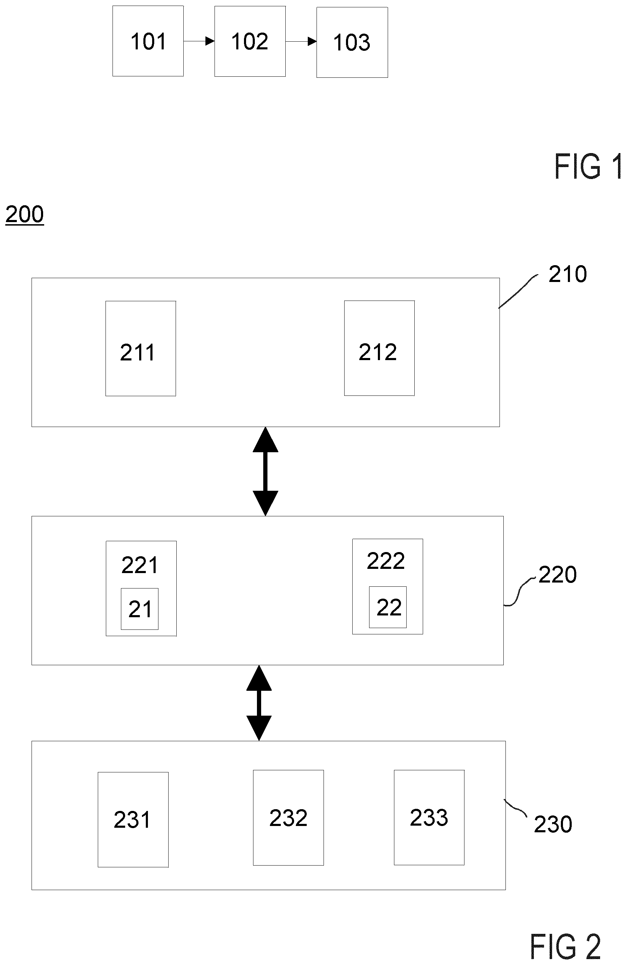

The present invention lays in the technical field of manufacturing execution systems (MES). Figure 1 schematically describes the steps of the method according to the invention and Figure 2 provides a schematical representation of a system for automatically collecting MES system information and configuration according to the invention.

In Figure 2, an enterprise system 200, i.e. a network of hardware devices and software, of a manufacturing enterprise is configured for the management of all production processes of products manufactured by said enterprise. Said enterprise system 200 comprises mainly 3 layers:
- a first layer 210 related to business process planning and comprising typically end-user hardware devices 211, 212, like a mobile device and/or one or several computer machines, wherein the production of a product can be planed and organized. Said first layer comprises usually all business intelligence;
- a second layer 220 which is the MES system itself, which is at the basis of the manufacturing intelligence of the enterprise; and
- a shop floor layer 230, which typically comprises production machines 231, sensors 232, actuators 233, logical devices, etc., which are involved in the production of planed products. Said third layer provides the production process intelligence. As known in the art, an operating system (OS) is configured for managing the different hardware devices and software resources of said network, providing for instance common services. Some hardware devices might be specifically dedicated to a single of the above-mentioned three layers, and other might be part of two or more layers.

The 3 layers can exchange information with each other so that planned production orders determined at the first layer 210 can be achieved by the shop floor layer 230. In case of a failure at the second layer, a maintenance operator has usually to use multiple remote sessions to collect information about the MES system infrastructure and has to launch manual processes or steps for investigating the general health of the MES system. The present invention provides a new way for collecting information about the MES system and its configuration without having to install any additional software that would be configured for collecting failure relevant information. The present invention proposes indeed to create an executable file 21, 22 configured for collecting data from the MES system, said data comprising at least functional data. Said executable file 21, 22 is configured for being copied on a non-volatile memory where the OS and/or MES system products are installed, e.g. on a server folder 221, 222 of the MES system. Upon its execution, said executable file is configured for gathering MES system information and configuration, automatically consolidating the gathered information into an HTML report which can be used then for instance by a maintenance operator for finding the source of said failure. Typically, the maintenance operator can use a computer machine for automatically launching the execution of said executable file 21, 22, receiving in return said HTML report. According to another preferred embodiment, each executable file according to the invention is automatically executed by the system according to the invention when the latter detects a failure or issue within the MES system, e.g. by measuring a percentage of CPU usage exceeding a predefined threshold for a predefined time period, or by identifying a specific event log, etc.

The method according to the invention will be now described in more details through the preferred embodiment illustrated by Fig. 1:
At step 101, the system according to the invention automatically collects MES system information and configuration. For this purpose, it automatically executes an executable file copied or saved on a non-volatile memory of the MES system, e.g. on a server folder of said enterprise system 200, or on a server folder of the MES system, preferentially on a server folder wherein said OS is installed. Said executable file is a stand-alone executable file. Preferentially, each executable file according to the invention, e.g. said first executable file and said second executable file, is an independent, stand-alone program that can be run, stored on non-volatile storage of the enterprise system 200 or more specifically of the MES system, accessed via a filesystem of a maintenance operator computer device, and executed on the OS. Upon its execution, the executable file according to the invention is configured for retrieving data, i.e. said MES system information and configuration, from one or several servers of the MES system, or more generally speaking, from one or several servers of the enterprise system 200.

For instance, considering a Microsoft Windows OS, the system according to the invention can comprise said first executable file 21 configured for being copied on a first server folder 221 comprising the installed OS and usually installed MES software products, and said second executable file 22 configured for being copied on a second server folder 222 comprising an SQL database server of the OS. In such a case, each of said first and second executable files is an EXE file (i.e. characterized by a ".exe" file extension) which comprises an executable program for Windows. Preferentially, the first executable file is configured for using and executing PowerShell commands for automatically retrieving or collecting information or data from said first server folder comprising the installed OS and the second executable file is configured for using and executing SQL statements for retrieving or collecting information or data from said SQL database server. Let's call in the following the first executable file "Server-Info.exe" and the second executable file "SQLIn-stancelnfo.exe".

According to the present invention, the ServerInfo.exe file is preferentially placed or copied on a Windows server folder, e.g. C:\TEMP, where MES system software products are installed and/or the OS is installed. Preferentially, the automatic execution of the ServerInfo.exe file, for instance launched by a maintenance operator or automatically launched by the system according to the invention, is configured for enabling the collection of part or all following information:
- information about the computer system, i.e. the machine of said enterprise system 200, wherein the OS and/or the MES system software products are installed, said information comprising for instance :
- System Uptime, and/or System Manufacturer, and/or System Model, and/or Windows OS version, and/or CPU Name and detail, and/or CPU Cores (Physical & Logical); and/or
- CPU Usage, and/or Total RAM, and/or Free RAM, and/or Percent of free RAM, and/or percent of free RAM collected when the tool has been executed; and/or
- Power Plan.
- information about disk and memory wherein the OS and/or the MES system software products is/are installed: notably, all or part of the following information can be automatically collected for each memory module that is installed (RAM): Module Slot Name, Module Mfr, Module Part number, Module Serial number, Data Width, Form Factor, Memory Type, Module Capacity, Module Speed, etc. Additionally, or optionally, disk information and performance can be collected, like information about the physical disks installed on the server (e.g. disk Model, DeviceID, Size (GB), Disk# Name), information about physical disks Performance (e.g. AvgDiskQueueLength, % Idle Time, % Write Time, % Read Time, Write IOPS, Read IOPS). Additionally, or optionally, information regarding logical disks is also automatically collected (e.g. size, free space). Preferentially, for each logical disk defined on the Windows OS, the ServerInfo.exe file automatically identify files with predefined extensions, like xml, and/or log, and/or txt, and/or pdf files, automatically determines for each of said predefined extensions, the number of files within the concerned logical disk. This enables notably to keep under control the number of files characterized by said predefined extension that are generated for instance by the MES system software products, and to automatically generate an alarm if the number of said files reaches a predefined limit which is configured for preventing disk capacity saturation.
- information about system processes: for instance, the Server-Info.exe file can be configured for listing the top 10 processes with highest working set memory usage. This might enable the system according to the invention to quickly detect if there is a process having a memory leak.
- information about system services: preferably, the Server-Info.exe file is configured for collecting information about Windows services, notably by automatically determining a list of Windows services that are set to Automatic startup and yet are currently stopped, and/or a list of Windows applications\programs that are configured to startup automatically, and/or a list of non-Windows services, and/or a list of scheduled tasks, and/or a list of Windows environment variables.
- network information: for instance, the ServerInfo.exe file might be configured for collecting configuration information about all active network adapters, like NIC Name, Link Speed, Up Time, MAC Address, IP Address, DHCP Server, Subnet Mask, Default Gateway, DNS Suffix, DNS Servers. Additionally, it can be configured for listing rules that define where data packets traveling over an Internet Protocol (IP) network will be directed.
- event log report information: the ServerInfo.exe file is preferentially configured for listing OS log events that are characterized by an event type related to a failure or critical issue, like a warning, an error, a critical value, wherein said event occurred on the last 24 hours. The ServerIinfo.exe file might also be configured for listing Application log events that are characterized by an event type related to a failure or a critical issue, like a warning, an error, a critical value, wherein said event occurred on the last 24 hours.
- software information: the ServerInfo.exe file might be further configured for automatically collecting information about software installed on hardware devices of the MES system and/or of said enterprise system, providing for instance a list of installed software with their respective version and installation date. It can be further configured for listing all installed Windows updates and/or for listing all non-Windows kernel drivers that are currently running.
- shares and printers information: the ServerInfo.exe file is for instance configured for collected information about configured shares and installed printers. For instance, it can automatically list all the configured shares providing details about the Name, Path, Status and Share Type (disk Drive, Print Queue, Device or IPC) and/or list all printers defined in the OS with the Printer Name, status, shared information (if enabled) and the Port Name.
- antivirus information: the ServerInfo.exe file can be configured for collecting information about the installed antivirus software.
- local group information: the ServerInfo.exe file can be configured for collecting information about Windows local groups and users assigned to each group.
- firewall information: the ServerInfo.exe file can be configured for collecting for instance information about the status of the Windows firewall, and/or a list of all ports defined on the Windows Firewall settings providing: Protocol, Port, Direction, Status and Block Status.
- time synchronization information: the ServerInfo.exe file can be configured for providing information whether a Time Service Synchronization is enabled or not, with the related server name where the synchronization takes place (if enabled) . Preferentially, it can also list all information about Time Synchronization details, like Source, Poll Interval, Status and Last Successful Synch Time.
- certificate information: the ServerInfo.exe file can for instance list all certificates installed on the machine where the OS is installed, and for each certificate, its expiration Date and Validation.
- product license information: for instance, the Server-Info.exe file can collect a list of installed licenses and their respective expiry date.
- IIS information: the ServerInfo.exe file might be configured for automatically collecting information about Windows IIS (IIS - Internet Information Services - is a Windows extensible web software), like web site information (e.g. Web Site name, the related path and the folder where the logs are saved (LogPath)). In particular, it can list all Application Pools defined on the Web Site, providing for instance the webAppPoolName, Path, Version, State, RunningAppCount and others. It can further automatically provide Application Pool Process Model information, Application Pool Recycling information, Application Pool Recycling Log Event information.

According to the present invention, the SQLInstanceInfo.exe file is preferentially placed or copied on a Windows server folder (e.g. C:\TEMP) where Microsoft SQL Server database is installed and running. Preferentially, the automatic execution of the SQLInstanceInfo.exe file, for instance launched by a maintenance operator or automatically launched by the system according to the invention, is configured for enabling the collection of part or all following information:
- SQL Server information: the SQLInstanceInfo.exe file is for instance configured for automatically collecting SQL Server Machine information, like the server name and the SQL Server Instance name. It can further be configured for automatically collecting SQL Server Instance and/or Manufacturer and/or Disk information. For instance, it can further be configured for automatically collecting SQL Server Disk Latency information, i.e. details about logical disk latency collected from SQL Server Statistics. It can further collect MAXDOP setting of the SQL server and/or MAX Memory settings. Other information can of course be further collected.
- scheduled jobs: the SQLInstanceInfo.exe file is preferably configured for collecting information about SQL Scheduled jobs, like Job Name, scheduled Frequency, Interval, Time, Details about the last execution status and Last Run Date. In particular, the system according to the invention might use said information for automatically determining whether a maintenance is in place or not, using for instance a naming convention of a maintenance task.

- SQL server services: the SQLInstanceInfo.exe file can for instance collect information about SQL Server services, like instance and Server Agent.
- SQL Server Alert Agent information: For instance, the SQLIn-stanceInfo.exe file can be configured for collecting SQL Server internal logs in order to determine notably whether there is an alert and/or an error.
- SQL Server Instance information: the SQLInstanceInfo.exe file can be configured for collecting settings of the SQL Server instance, like internal traces, target server memory, total server memory, Page Life Expectancy (PLE). The latter is notably related to an age (in seconds) of a page of data in a buffer cache or memory, i.e. to how long said data page has been in said buffer cache or buffer memory after having been queried and loaded in said buffer cache or memory. The system according to the invention may use the value of the PLE for determining whether the MES system is under memory pressure.
- SQL Server Instance DB information: preferentially, the SQLInstanceInfo.exe file is configured for collecting information about all databases (DB) managed by the SQL Server instance, like DB size, DB configuration information, DB file latency information, memory/buffer usage for each DB, DB virtual log file information, DB CPU utilization, etc.
- SQL Server Instance statistics information: the SQLIn-stanceInfo.exe file is in particular configured for collecting statistics information regarding the SQL Server instance, like a list of all active open processes in the SQL server, a list of all logins connected to the SQL server, waiting times recorded by the SQL server, etc.
- SQL Server Instance TSQL Performance information: the SQLIn-stanceInfo.exe file can also be configured for collecting and reporting statistics about the worst SQL statements that affect the whole SQL instances, e.g. a list of the top 15 worst statements ordered by average execution time, and/or a list of the top 15 worst statements ordered by total execution time, and/or a list of the top 15 worst statements ordered by decreasing total CPU time, etc.

Upon execution, the SQLInstanceInfo.exe file might be further configured for automatically detecting all databases within the MES system, and for each of them, it might be further configured for automatically collecting predefined information, wherein said predefined information comprises all or part of the following information:
- Database Main Properties: it provides a list of all or part of the properties of the concerned database;
- Top 30 biggest Tables: it provides a list of the 30 biggest tables ordered by decreasing number of contained records;
- Top 30 tables with bad Indexes Writes>Reads: it provides for instance a list of the 30 tables that have indexes that are not completely used, ordered by writes > reads;
- Top 30 possible missing indexes ordered by user advantage: as known in the art, a proper index can improve the performance while a bad index can hamper the performance of the database. The SQLInstanceInfo.exe file might be thus further configured for listing missing indexes based on statistics collected on DMVs, ordered for instance by index advantage impact;
- Indexes with Fragmentation >=30 and allocated pages > 50;
- Tables with latching and locking contentions;
- Identification of duplicated indexes;
- SQL Server Instance TSQL performance info: as previously described, the SQLInstanceInfo.exe file can also be configured for collecting and reporting statistics about the worst SQL statements that affect this time the concerned database, listing, as previously described, top 15 worst statements ordered by total execution time or by average execution time, etc.
- Misaligned statistics: the SQLInstanceInfo.exe file might be configured for listing misaligned statistics in the concerned database. Misaligned statistics represent incorrect statistics that might be used by the SQL Server and that impact execution time required by the SQL server for performing some tasks.

At step 102, the system according to the invention automatically creates, as a result of the execution of said executable file, a report comprising the collected system information and configuration converted into an HTML format. In particular, at the end of the execution of the ServerInfo.exe file, the latter automatically generates an HTML report comprising all collected information. Optionally, the ServerInfo.exe file can generate additional files based on the collected information. Similarly, at the end of the execution of the SQLIn-stanceInfo.exe file, the latter automatically generates an HTML report comprising all collected information for the SQL server. Preferentially, the SQLInstanceInfo.exe file further generates for each of said detected database, an additional HTML report comprising the above-mentioned information collected for the concerned detected database. Optionally, the SQLInstanceInfo.exe might also automatically generate other files based on the collected information.

Finally and optionally, at step 103, the system according to the invention automatically sends and/or displays and/or saves each of the generated reports.

The present invention proposes thus a very efficient way to gather information from a MES system. For instance, if it happens that a MES system has an issue or a failure, an operator of a support service can simply copy each executable files according to the invention on said non-volatile memory of the MES system, or, by launching the system according to the invention, each of said executable files can be automatically copied on said non-volatile memory, and then automatically launched/executed for collecting the required MES functional data. For instance, once copied on said non-volatile memory, the system can automatically launch said first and second executable files, in order to automatically collect the MES functional data, and generate one or several reports according to the invention. The system may then be further configured for automatically finding the source of the failure from an analysis of data comprised within the generated report(s), notably MES functional data reported in said report, and for automatically triggering an action for mitigating an impact of said failure on the production of a product, e.g. by automatically sending an alarm message to an operator or to a machine. For finding the source of the failure, the system preferentially uses a trained algorithm configured for automatically analyzing the data comprised within each of the reports, each report according to the invention being thus received as input of the trained algorithm, the latter being configured for automatically determining and outputting as result one or several sources of the failure or issue, the system preferentially further comprising triggering an action, like sending said alarm message, wherein the recipient (machine or operator) of each message is for instance automatically determined in function of the source of the failure. In particular, the system comprises different rules that are configured for determining which action has to be triggered in function of the failure source.

In conclusion, the present invention advantageously provides a system and method capable of automatically collecting information from a MES system, generating via execution of one or several executable files one or several HTML reports which comprise information about the MES system and its configuration.

## Claims

1. Method for automatically collecting data from a MES system (220), the method comprising the following steps:
a) automatically collecting (101), by an executable file (21, 22) configured for being copied on a non-volatile memory of the MES system, and upon execution of said executable file, MES system information and configuration, wherein said MES system information and configuration comprises at least MES functional data;
b) automatically creating (102), by said executable file (21, 22), a report comprising the collected system information and configuration converted into an HTML format.

2. The method according to claim 1, comprising:
c) automatically sending (103) and/or displaying and/or saving said report.

3. The method according to claim 1 or 2, wherein the executable file is configured for being copied on a server folder of the MES system.

4. The method according to one of the claims 1 to 3, wherein a first executable file is configured for being copied on a server folder comprising installed MES system software and a second executable file is configured for being copied on a server folder comprising an SQL database server.

5. A system configured for automatically collecting data from a MES system (220), said system comprising:
- a graphical user interface;
- a processing unit (222) configured for acquiring and processing data;
- a memory;
wherein said processing unit is configured for automatically collecting, by an executable file configured for being copied on a non-volatile memory of the MES system, and upon automatic execution of said executable file, MES system information and configuration, wherein said execution of said executable file is further configured for automatically generating a report comprising the collected system information and configuration converted into HTML format, said processing unit being configured for automatically acquiring said report.

6. System according to claim 5, wherein said processing unit is configured for automatically sending and/or displaying and/or saving said report.

7. System according to claim 5 or 6, wherein the executable file is configured for being copied on a server folder of the MES system.

8. System according to one of the claims 5 to 7, wherein a first executable file is configured for being copied on a server folder comprising installed MES system software and a second executable file is configured for being copied on a server folder comprising an SQL database server.

9. System according to one of the claims 5 to 8, further configured for automatically finding a source of the failure from an analysis of data comprised within said generated report, and for automatically triggering an action for mitigating an impact of said failure on the production.

10. A non-transitory machine-readable medium storing instructions executable by a processing unit to cause a computing system to perform the steps of the method according to claims 1 to 4.
